# EUROPEAN PATENT SPECIFICATION

(11) **EP 3 045 323 B1**
(45) Date of publication and mention of the grant of the patent: **11.07.2018**
(21) Application number: 16150102.8
(22) Date of filing: 04.01.2016
(51) Int. Cl.: B60C 1/00, C08L 7/00, C08L 9/06, C08K 3/36, C08K 3/04

(54) **RUBBER COMPOSITION AND TIRE WITH TREAD INTENDED FOR BOTH ON AND OFF-THE-ROAD SERVICE**
KAUTSCHUKZUSAMMENSETZUNG UND REIFEN MIT LAUFFLÄCHE, DIE FÜR STRASSEN- UND GELÄNDEFAHRT VORGESEHEN SIND
COMPOSITION DE CAOUTCHOUC ET PNEU AVEC BANDE DE ROULEMENT DESTINÉE À UNE UTILISATION SUR ROUTE ET TOUT-TERRAIN

(30) Priority: 13.01.2015 US 201514595425
(43) Date of publication of application: 20.07.2016
(73) Proprietor: The Goodyear Tire & Rubber Company, Akron, Ohio 44316 (US)
(72) Inventor: FORCINITI, Leandro, Canton, OH Ohio 44720 (US); CERRATO MEZA, Roberto, North Canton, OH Ohio 44720 (US); BUSCH, Warren James, North Canton, OH Ohio 44720 (US)
(74) Representative: Kutsch, Bernd

(56) References cited:
- EP-A1- 1 452 344
- EP-A1- 2 336 231
- EP-A2- 2 072 284
- DATABASE WPI Week 199920 Thomson Scientific, London, GB; AN 1999-232723 XP002758554, & JP H11 60816 A (TOYO RUBBER IND CO LTD) 5 March 1999 (1999-03-05)

## Description

### Field of the Invention

This invention relates to tires, preferably heavy duty pneumatic rubber tires with treads intended for mixed service use on diverse surfaces, and to rubber compositions for the treads of such tires.

### Background of the Invention

Pneumatic tires are sometimes intended for heavy duty use such as example for hauling and for traveling over uneven ground when carrying heavy loads which might be referred to as being off-the-road service. Exemplary of such tires are medium truck tires such as, for example, dump trucks, waste haul trucks as well as some bus vehicles.

Pneumatic tires are often intended for use on dedicated road surfaces which might be referred to as being on-the-road service.

However, sometimes such pneumatic tires are also intended for mixed service use to be driven on diverse surfaces including a combination of both roadways and also off-the-road conditions which present more severe use conditions for the tires.

A combination of such intended diverse mixed service use conditions presents significant challenges for rubber compositions for treads of such tires. A balanced combination of lower internal heat generation while maintaining or improving cut growth resistance as well as abrasion resistance properties for the tread rubber is difficult to obtain. Here, a methodology of achieving such result is presented, particularly for a rubber composition for a tire tread intended for mixed diverse service.

For heavy duty tire tread work, the principal (primary) elastomer used for the tread rubber composition is often natural rubber (natural cis 1,4-polyisoprene rubber), particularly to promote tear resistance (resistance to cut growth initiation) for the tire tread. The tread rubber may contain a minor amount of cis 1,4-polybutadiene rubber to promote abrasion resistance and thereby resistance to tread wear to promote a greater vehicular driving distance relative to depth of tread worn away.

Such natural rubber-rich treads are in contrast to passenger tire treads for lighter intended duty which are expected to be driven over dedicated roadways while experiencing lower workloads and which may typically be comprised primarily of styrene/butadiene rubber with a minor amount of cis 1,4-polybutadiene rubber and which may also contain a minimal amount of natural rubber, if any.

For example, rubber compositions for natural rubber-based treads of such heavy duty tires for such mixed service may be desired which promote a relatively low hysteresis property for the tread rubber which thereby can promote reduced internal heat buildup in the tread during tire service with a corresponding beneficial increased heat durability of the tread and predictive beneficial reduction in tire rolling resistance for better fuel economy for an associated vehicle.

A further benefit of providing a natural rubber-rich tread is to promote resistance to cut growth initiation (tear resistance), particularly when the tire treads are intended for service over harsh ground conditions such as may be experienced in off-the-road heavy duty service as well as unimproved roadway conditions.

For the beneficial promotion of reduction in hysteresis property for the natural rubber-based tread rubber composition, it may be thought of to employ filler reinforcement for the rubber composed of silica such as precipitated silica reinforcement instead of, or with a significantly reduced amount of, rubber reinforcing carbon black.

For the beneficial promotion of increase in abrasion resistance for natural rubber-based rubber compositions for treads of such tires may also be desired to provide a minor amount of cis 1,4-polybutadiene rubber for predictive increase in resistance to tread wear and thereby promote a longer lasting tire service.

For the aforesaid promotion of beneficial resistance to cut growth initiation and cut growth propagation for the natural rubber-based tread rubber composition it may also be thought of employ reinforcing filler composed of silica such as precipitated silica instead of, or with a significantly reduced amount of rubber reinforcing carbon black.

However, such use of silica for the natural rubber-based tread rubber filler reinforcement for the tread rubber without including carbon black might be expected to promote a reduction in abrasion resistance and therefore promote a reduction in resistance to tread wear for which the aforesaid inclusion of a minor amount of cis 1,4-polybutadiene rubber may be appropriate to regain a degree of abrasion resistance for the tread rubber composition.

A challenge remains, however, of promoting an improvement (reduction) in hysteresis of the tread rubber composition with its aforesaid promotion of reduction in rate of internal heat generation without reducing a resistance to cut growth initiation (tear resistance) of the tread rubber during such mixed service.

For such challenge for the silica-rich natural rubber based tire tread, it has been discovered that use of silica such as precipitated silica reinforcement comprising a bimodal aggregate size distribution together with a monomodal pore size distribution can be used to promote a beneficial reduction in hysteresis together with a beneficial increase in resistance to cut growth initiation and propagation (sometimes referred to as tear resistance) for the tread composition intended for use in such mixed service conditions.

It is believed that use of such bimodal aggregate size configured silica reinforcement is a departure from past practice for use in a silica-rich, natural rubber-rich tread rubber composition intended for the aforesaid mixed service where a reduced hysteresis is desired together with resistance to abrasion and resistance to cut initiation are also desired.

For the mixed service tread of a natural rubber rich tread rubber composition, it is further desired to evaluate providing an inclusion of a minor amount of at least one of cis 1,4-polybutadiene rubber and low Tg styrene/butadiene rubber (SBR) to aid in promoting abrasion resistance while substantially maintaining hysteresis and cut growth initiation (tear resistance) properties of the tread rubber. For such purpose, it is desired that the SBR has a relatively low styrene content in a range of from 12 to 20 percent to promote a low Tg (glass transition temperature) property of the SBR in a range of, for example, from -68°C to -72°C.

In order to meet minimal requirements for such mixed service tire treads, the following combination of threshold physical properties are desired for the tire tread rubber composition as presented in the following Table A. For this invention, however, it is desired to evaluate providing a tread rubber composition with enhanced physical properties which exceed the threshold physical properties of Table A.

**Table A**

| Properties -various test methods are described in the Examples | | Threshold Values |
|---|---|---|
| 1. | Storage modulus (G'), MPa (10% strain, 1 Hertz, 100°C) | > = 1.01 |
| 2. | Tan delta, (10% strain, 1 Hertz, 100°C) | < 0.250 |
| 3. | Rebound, hot (100°C) | > = 55 |
| 4. | Grosch abrasion rate, high severity (mg/km) | < = 1000 |
| 5. | Tear resistance (N) | > 125 |
| 6. | Toughness = ratio of specific energy to break (joules)/ 300% modulus (MPa) | > = 500 |

In the description of this invention, terms such as "compounded rubber", "rubber compound" and "compound", if used herein, refer to rubber compositions containing of at least one elastomer blended with various ingredients, including curatives such as sulfur and cure accelerators. The terms "elastomer" and "rubber" may be used herein interchangeably unless otherwise indicated. It is believed that such terms are well known to those having skill in such art. Number and weight average molecular weights of an elastomer, if referenced, may be determined by, for example, by gel permeation chromatography (GPC) analytical equipment usually combined with a light scattering detector, a methodology known to those having skill in the polymer analytical art. The glass transition temperature (Tg) of a rubber is determined by differential scanning calorimetry according to ASTM D3418-12.

### Disclosure and Practice of the Invention

The invention relates to a rubber composition in accordance with claim 1 and to a tire in accordance with claim 15.

Dependent claims refer to preferred embodiments of the invention.

In accordance with one embodiment of this invention, a rubber composition is provided which comprises, based on parts by weight per 100 parts by weight of elastomer (phr),
(A) conjugated diene-based elastomers comprising
   (1) 55 to 80, alternately 60 to 80, phr of cis 1,4-polyisoprene rubber comprising natural or synthetic, desirably natural, cis 1,4-polyisoprene rubber,
   (2) 20 to 45, alternately 20 up to 40, phr of at least one of cis 1,4-polybutadiene rubber and organic solution polymerization prepared styrene/butadiene rubber (S-SBR) having a bound styrene content in a range of from 12 to 20 percent,
(B) 40 to 120, alternatively 50 to 100, phr of a rubber reinforcing filler comprising a combination of rubber reinforcing carbon black and silica, preferably precipitated silica (synthetic amorphous precipitated silica), wherein said reinforcing filler comprises from 2 to 50, alternately from 4 to 40 phr of rubber reinforcing carbon black, and from 38 to 118, alternately from 46 to 96, phr of silica or precipitated silica together with a silica coupling agent (for said silica or precipitated silica) having a moiety reactive with hydroxyl groups (e.g. silanol groups) on said silica and another different moiety interactive with carbon-to-carbon double bonds of said conjugated diene-based elastomers;
   wherein the silica or precipitated silica is of a or comprises a bimodal aggregate size configured silica with a monomodal pore size distribution;
   wherein said bimodal aggregate sized silica comprises a 60 to 80 percent of an average aggregate size configuration in a range of from 0.05 to 0.11 microns (50 to 110 nm) and 20 to 40 percent of an average size configuration in a range of from 0.12 to 1 micron (120 to 1,000 nm).

In one embodiment, said silica or precipitated silica may also contain from 2 to 20 weight percent thereof of a monomodal aggregate sized silica or precipitated silica, if desired and appropriate.

For the elastomers in one embodiment, the cis 1,4-polybutadiene rubber has a cis 1,4- isomeric content of at least 95 percent.

For the elastomers, it is important to appreciate that the low styrene content of the S-SBR in a range of from 12 to 20 percent is provided to promote the S-SBR with a low Tg in a range of from -68°C to -72°C. This distinguishes the S-SBR for this invention from S-SBR's with higher styrene contents and from emulsion (aqueous emulsion) polymerization derived styrene/butadiene rubber (E-SBR) which would be normally be expected to have a bound styrene content of 23.5 percent and a Tg in a range of from -48°C to -52°C.

In one embodiment, said S-SBR may be a functionalized styrene/butadiene rubber containing at least of one of end-functional and in-functional terminal functional groups desirably comprises siloxy and at least one of amine and thiol groups reactive with hydroxyl groups on the bimodal aggregate sized silica (and on the additional monomodal aggregate sized silica if used).

In one embodiment, said functionalized S-SBR may be tin coupled (a tin coupled functionalized S-SBR).

In one embodiment, the diene based elastomer in addition to the cis 1,4-polyisoprene rubber is the cis 1,4-polybutadiene rubber.

In one embodiment, the diene based elastomer in addition to the cis 1,4-polyisoprene rubber is the S-SBR having a Tg in a range of from -68° to -72°.

In one embodiment, said diene based elastomer in addition to the cis 1,4-polyisoprene rubber is a combination of the cis 1,4-polybutadiene rubber and S-SBR rubber.

In further accordance with this invention, a pneumatic rubber tire is provided having a tread comprising said rubber composition comprising the combination of dispersion of bimodal aggregate sized silica and the aforesaid diene-based elastomers, particularly a tire intended for the aforesaid mixed service such as a combination of on-the-road and off-the-road service.

In one embodiment, the bimodal aggregate sized silica aggregates has a relatively high average nitrogen surface area of greater than 190 m²/g. Further, in one embodiment, the bimodal aggregate sized silica has a relatively narrow average monomodal pore size distribution in a range of from 13 to 23 nanometers (nm) as determined by mercury porisometry.

The nitrogen surface area is determined by the Brauner-Emmitt-Kelly method (American Chemical Society, v.60, year 1938).

As indicated, the pore size of the bimodal aggregated sized silica or precipitated silica is of a monomodal average sized silica aggregates, as measured by mercury porisometry.

Monomodal is used herein to mean a single peak in a graphical depiction.

The bimodal size configured silica aggregates for use in this invention are acidic in nature in the sense of having a pH in a range of from 3 to 5.6 in contrast to what is believed to be a more normal pH in a range of from 6 to 8 for a monomodal aggregate size configured silica.

In one embodiment, said bimodal sized silica aggregates and silica coupling agent may be provided individually (contained individually) in the rubber composition and thereby react together in situ within the rubber composition or may be provided (contained in said rubber composition) as a pre-formed composite (pre-formed prior to addition to said rubber composition) of said silica (comprising said bimodal aggregate sized silica) and silica coupling agent reacted together and the composite added to the rubber composition.

In one embodiment, the cis 1,4-polybutadiene rubber is or comprises at least one of:
(A) a first cis 1,4-polybutadiene rubber having a microstructure comprising from 90 to 99 percent cis 1,4-isomeric units, a number average molecular weight (Mn) in a range of from 120,000 to 300,000 and a heterogeneity index (Mw/Mn) in a range of from 2.1/1 to 4.5/1 (a relatively high heterogeneity index range illustrating a significant disparity between its number average and weight average molecular weights), or
(B) a second cis 1,4-polybutadiene rubber having a microstructure comprising from 93 to 99 percent cis 1,4-isomeric units, a number average molecular weight (Mn) in a range of from 150,000 to 300,000 and a heterogeneity index (Mw/Mn) in a range of from 1.5/1 to 2/1 (a relatively moderate heterogeneity index range illustrating a moderate disparity between its number average and weight average molecular weights).

In one embodiment, said first cis 1,4-polybutadiene rubber may be the product of a nickel or cobalt catalyst promoted polymerization of 1,3-butadiene monomer in an organic solvent solution. For example, US-A-5,451,646 illustrates nickel catalyzed polymerization of 1,3-butadiene monomer with a catalyst system comprised of, for example, a combination of an organonickel compound (e.g. nickel salt of a carboxylic acid), organoaluminum compound (e.g. trialkylaluminum) and fluoride containing compound (e.g. hydrogen fluoride or complex thereof).

Representative of said first cis 1,4-polybutadiene elastomer is, for example, Budene 1207™ from The Goodyear Tire & Rubber Company.

In one embodiment, the cis 1,4-polybutadiene elastomer may be tin coupled to provide branched, higher molecular weight, cis 1,4-polybutadiene.

Representative of such tin coupled, branched, cis 1,4-polyutadine elastomer is, for example, Budene 4001™ from The Goodyear Tire & Rubber Company.

In one embodiment, said second cis 1,4-polybutadiene rubber may be the product of a neodymium or titanium catalyst promoted polymerization of 1,3-butadiene monomer in an organic solvent. For example, 1,3-butadiene monomer may be polymerized in an organic solvent solution in the presence of a catalyst system comprising, for example, organoaluminum compound, organometallic compound such as for example neodymium and labile (e.g. vinyl) halide described in for example US-A-4,663,405 for the neodymium catalyzed polymerization.

Representative of neodymium compounds might be, for example, neodymium neodecanoate, neodymium octanoate or neodymium versalate. The neodymium compounds might be derived from a neodymium carboxylate soap such as, for example Nd(R-C00)₃. Representative of aluminum alkyl compounds may be, for example, triisobutylaluminum (TIBA) and diisobutylaluminum hydride (DIBAH). Representative of aluminum chloride delivering compounds may be, for example, diethylaluminum chloride, all so long as the specialized polybutadiene elastomer possesses the aforesaid microstructure, molecular weight and heterogeneity index and Tg ranges.

Therefore, the catalyst for preparation of said second specialized polybutadiene elastomer is exclusive of cobalt or nickel based catalysts used for preparation of cis 1,4-polybutadiene elastomers.

A purpose for the use of the second polybutadiene may be to promote higher rebound values for the rubber composition which is predictive of less internal heat generation, and therefore less temperature build-up for the rubber composition when it is being worked and predictive of better (lower) rolling resistance for a tire with a tread of such rubber composition which contains the specialized polybutadiene rubber. A further purpose is to promote greater abrasion resistance of the rubber composition which is predictive of better resistance to tread wear for a tire with such rubber composition in which the polybutadiene elastomer is the second specialized polybutadiene elastomer.

Representative of said second cis 1,4-polybutadiene elastomer for use in this invention as 1,3-butadiene polymerized with a neodymium based catalysis is, for example, CB25™ Budene from Lanxess and Budene 1223™ from The Goodyear Tire & Rubber Company.

In one embodiment, the polymer chain of the second specialized polybutadiene elastomer might be coupled (e.g. the polybutadiene rubber being coupled to itself to thereby increase its molecular weight or to promote branching of the elastomer, namely branching of its polymer chain), for example, by treatment with, for example, a sulfur chloride such as, for example, disulfur dichloride as mentioned in US-A-5,567,784 as would be known to those having skill in such art.

In one embodiment, the tire tread includes an underlying tread base rubber layer (underlying the ground-contacting outer tread rubber layer containing the bimodal aggregate sized precipitated silica dispersion) which may comprise a rubber composition comprising, for example, at least one conjugated diene-based elastomer (e.g. cis 1,4-polyisoprene natural rubber) and a reinforcing filler comprising rubber reinforcing carbon black and, optionally, silica or precipitated silica (e.g. monomodal average sized precipitated silica).

The silica coupling agent for the silica may comprise, for example, a bis (3-trialkoxysilylalkyl) polysulfide containing an average in a range of from 2 to 3.8, alternately from 2 to 2.6 and alternately from 3 to 3.8, connecting sulfur atoms in its polysulfidic bridge or an alkoxyorganomercaptosilane.

In one embodiment, said silica coupling agent is said bis(3-trialkoxysilylalkyl) polysulfide comprising a bis(3-triethoxysilylpropyl) polysulfide.

In one embodiment, said bis(3-triethoxypropyl) polysulfide silica coupling agent contains an average in a range of from 2 to 2.6 connecting sulfur atoms in its polysulfidic bridge. Such silica coupling agent with a polysulfidic content to an average of from 2 to 2.6 connecting sulfur atoms may be particularly useful to promote ease of processing, including mixing, extruding and calendering, the uncured rubber composition.

In one embodiment, the reinforcing filler may be provided as being primarily composed of the bimodal aggregate configured silica or precipitated silica.

The bimodal aggregate configured precipitated silica reinforcement for the rubber composition is a synthetic amorphous silica obtained, for example, by a controlled acidification of a soluble silicate (e.g. sodium silicate).

Historically, various rubber compositions have been proposed to which have been added two or more individual silicas each of which is composed of different averages of particulate aggregate sizes. For example, see US-B-6,121,346. It has also been proposed to provide a precipitated silica composed of a dual aggregate configuration. For example, see US-B-6,225,397.

However, for this evaluation, the use of an individual silica is evaluated having a significant increased acidity (low pH) and relatively high nitrogen surface area which is composed of the aforesaid bimodal aggregate size configuration comprising silica or precipitated silica particles, namely comprising a first aggregate configuration of from 60 to 80 weight percent of the silica having an average particle size in a range of from 0.05 to 0.11 microns and a second aggregate configuration of from 20 to 40 weight percent of the silica having an average particle size in a range of from 0.12 to 1 micron.

As previously mentioned, the pore size distribution of the bimodal configured silica aggregates, as measured by mercury porosimetry is monomodal.

Mercury porosimetry analysis involves measuring surface area of the silica, collectively including pores of the silica aggregates and of the primary particles making up the silica aggregates, where, for example, mercury is allowed to penetrate into the pores of the silica after a thermal treatment to remove volatiles by a method known to those having skill in such art. Such method is performed according to a method reported in DIN 66133 where, for such evaluation, a Carlo-Erba Porosimetry 2000 is used. A Washburn equation is reported as being employed to calculate pore diameters.

In order to further understand the nature of such bimodal aggregate configured silica or precipitated silica, drawings in a form of graphical representations are provided.

### Brief Description of the Drawings

Figure 1 presents individual aggregate size distribution curves for precipitated Silica A and precipitated Silica B.
Figure 2 presents individual relative and cumulative pore volume curves for aggregates of precipitated Silica A.
Figure 3 presents individual relative and cumulative pore volume curves for aggregates of precipitated Silica B.

Precipitated Silica A represents a bimodal sized precipitated silica aggregate configuration as Toksil UR™ from Tokuyama Siam. Precipitated Silica B represents a monomodal sized precipitated silica aggregate configuration as Premium 100™ from Solvay.

### In the Drawings

### Figure 1

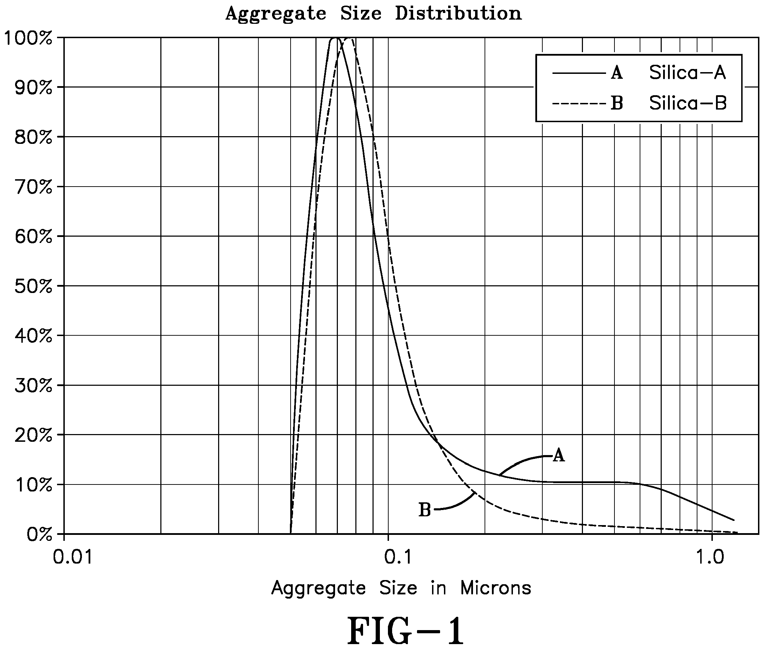

Figure 1 presents curves to illustrate precipitated silica average aggregate sizes for Silica A and for Silica B.

Curve A represents aggregates of precipitated silica A and curve B represents aggregates of precipitated Silica B.

The silica aggregate sizes are plotted on the X axis and the relative weight percentages of the silica aggregates are plotted on the Y axis. The X axis of the curves is presented on a scale of from 50 to 1000 nm (nanometers), or 0.05 to 1.0 microns.

In Figure 1 it can be seen that Curve B contains a single, relatively sharp, peak at about 60 nm (at about 0.06 microns), for its aggregate size distribution. This single peak represents a monomodal aggregate size distribution (e.g. configuration) for Silica B.

In Figure 1 it can also be seen that Curve A contains dual peaks in a form of a first relatively sharp peak at about 80 nanometers (about 0.8 microns) in addition to a second broader less defined peak at 200 to 500 nanometers (2 to 0.5 microns), for its aggregate size configuration. This dual peak represents a bimodal aggregate size configuration for Silica A.

### Figures 2 and 3

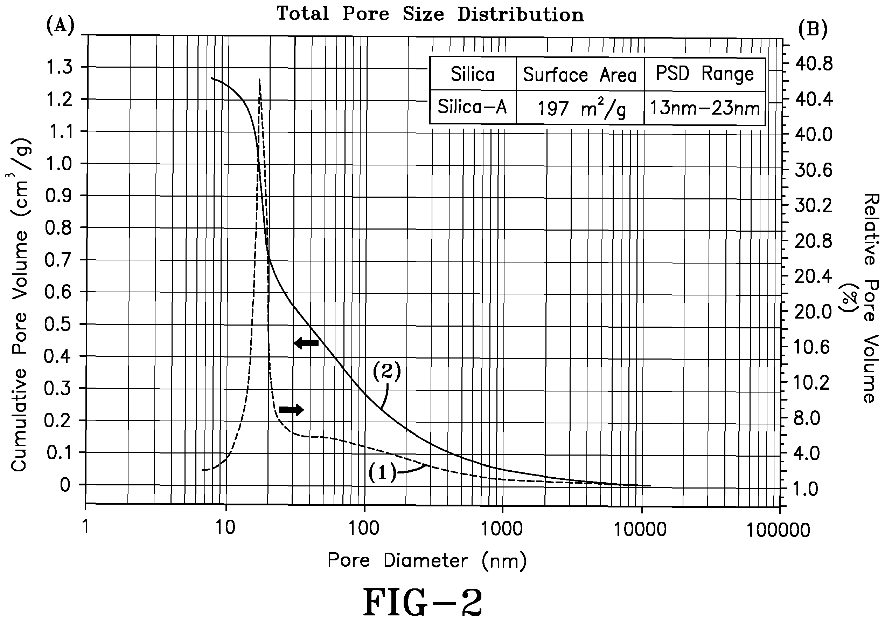

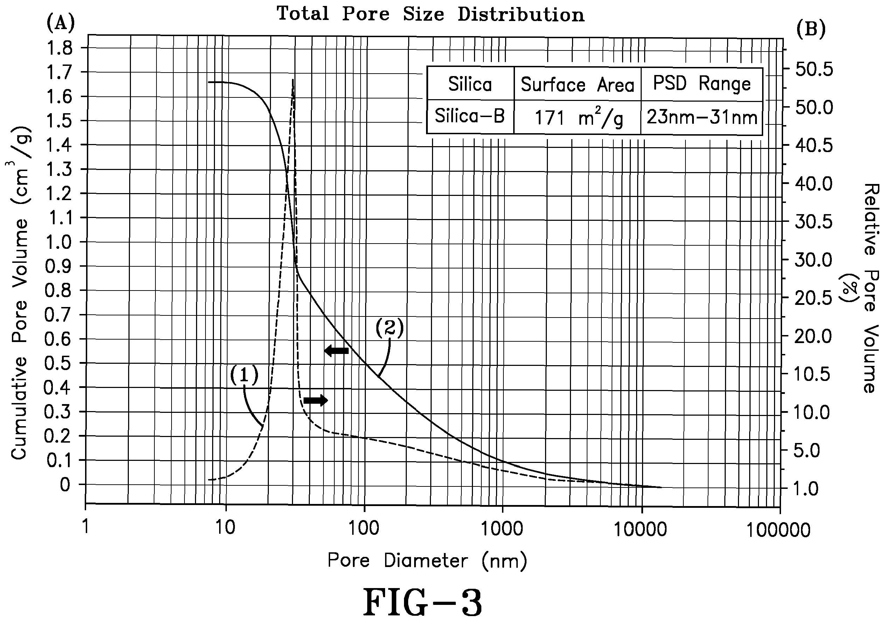

Figures 2 and 3 present curves of (1) Relative Pore Volumes and (2) Cumulative Pore Volumes for the left and right Y axis versus average pore diameters on the X axis for the aggregates of precipitated Silica A in Figure 2 and for precipitated Silica B in Figure 3.

The X axis is presented on a scale of from 8 to 10,000 nanometers for the average pore diameters for the precipitated silica aggregates according to mercury porosimetry.

The Y axis (left vertical scale) is presented on a scale of 0.01 to 1.25 cc/gram for the average Cumulative Pore Volumes for the precipitated silica aggregates.

The Y axis (right vertical scale) is presented on a scale of 1 to 40.5 percent for average relative pore volumes for the precipitated silica aggregates.

### Comparison and Conclusions Drawn from the Curves of Figures 2 and 3

In Figure 2, representing precipitated Silica A, it can be seen that Curve (1) (average pore volumes) presents a single peak at about 18 mn which is representative of a monomodal pore size distribution for Silica A.

It is further observed from Figure 2 that the Curve (1) is a very sharp shaped curve thereby indicating a narrow monomodal pore size configuration for Silica A.

In Figure 3, representing precipitated Silica B, it can be seen that Curve (1) (average pore volumes) presents a single peak at about 38 nm which is representative of a monomodal pore size distribution for Silica B for a larger average pore size than the pore size of Silica A (in Figure 2).

It is further observed from Figure 2 that the Curve (1) is a very sharp shaped curve thereby indicating a narrow monomodal pore size distribution for Silica B.

Therefore, in summary, it is concluded that the aggregates of Silica A are of a bimodal size distribution configuration and that the average pore size of the aggregates of Silica A are of a monomodal configuration.

In Figure 2, representing precipitated Silica A, the inserted box reports that the aggregates of Silica A were observed to have an average pore size distribution (PSD) in a range of from 13 to 23 nm (taken from Curve (1) in Figure 2), and an average nitrogen surface area of about 197 m²/g.

In Figure 3, representing precipitated Silica B, the inserted box reports that the aggregates of Silica B were observed to have a significantly larger average pore size distribution (PSD) in a range of from 23 to 31 nm (taken from Curve (1) in Figure 3), and a smaller average nitrogen surface area of about 171 m²/g.

A further distinguishing feature of the bimodal silica aggregate sized Silica A is its acidity, represented by a pH in a range of from 3 to 5.6 taken from a water dispersion of Silica A. In contrast Silica B (the monomodal aggregate sized precipitated silica) is represented by a higher pH in a range of from 6 to 8 which approximates a more neutral pH.

A significance of the greater acidity of the bimodal aggregate sized Silica A, such as the bimodal configuration sized precipitated silica used for this invention with a pH in a range of from 3 to 5.6, is its promotion of longer polysulfidic sulfur cross link chains in a sulfur cured rubber composition which promotes a beneficial increase in tear resistance property (increase in resistance to cut growth initiation property) for the sulfur cured rubber composition in addition to the rubber reinforcing effect of the bimodal aggregate sized precipitated silica.

In a significant contrast, the monomodal aggregate sized silica B is less acidic in a sense of having a typical almost neutral pH in range of from 6 to 8 which thereby presents a tendency of promotion of shorter polysulfidic chains in a sulfur cured rubber composition and thereby a promotion of a lesser tear resistance property (a less cut growth initiation property) for the sulfur cured rubber composition.

It would be readily understood by those having skill in the art that the natural rubber-rich tread for the aforesaid mixed service use conditions, which also contain a minor amount of the at least one of the polybutadiene and low styrene containing S-SBR elastomers, would be compounded with conventional compounding ingredients including the aforesaid reinforcing fillers such as carbon black and precipitated silica, although this invention would require the precipitated silica with bimodal aggregate configuration with monomodal pore size distribution and low pH, as well as antidegradant(s), processing oil, fatty acid comprised of, for example, at least one of stearic, oleic, palmitic, and possibly linolenic, acids, zinc oxide, sulfur cure materials including sulfur and vulcanization accelerator(s).

Processing aids may be used, for example, waxes such as microcrystalline and paraffinic waxes, in a range, for example, of 1 to 5 phr or 1 to 3 phr, if used; and resins, usually as tackifiers, such as, for example, synthetic hydrocarbon and natural resins in a range of, for example, 1 to 5 phr or 1 to 3 phr, if used. A curative might be classified as sulfur together with one or more sulfur cure accelerator(s). For the sulfur and accelerator(s) curatives, the amount of sulfur used may be, for example, from 0.5 5 phr, more usually in a range of 0.5 to 3 phr; and the accelerator(s), often of the sulfenamide type, is (are) used in a range of 0.5 to 5 phr, often in a range of 1 to 2 phr. The ingredients, including the elastomers but exclusive of sulfur and accelerator curatives, are normally first mixed together in a series of at least two sequential mixing stages, although sometimes one mixing stage might be used, to a temperature in a range of, for example, 145°C to 185°C, and such mixing stages are typically referred to as non-productive mixing stages. Thereafter, the sulfur and accelerators, and possibly one or more retarders and possibly one or more antidegradants, are mixed therewith to a temperature of, for example, 90°C to 120°C and is typically referred as a productive mix stage. Such mixing procedure is well known to those having skill in such art.

After mixing, the compounded rubber can be fabricated such as, for example, by extrusion through a suitable die to form a tire tread. The tire tread is then typically built onto a sulfur curable tire carcass to form an assembly thereof and the assembly thereof cured in a suitable mold under conditions of elevated temperature and pressure by methods well known to those having skill in such art.

The invention may be further understood by reference to the following example in which the parts and percentages are by weight unless otherwise indicated.

### EXAMPLE I

Rubber compositions were prepared to evaluate their use as a tread rubber for a mixed service tire intended for high severity use.

Rubber compositions are referred in this Example as Control (Comparative) rubber Samples 1 through 4 together with Experimental rubber Samples A through E.

Control (Comparative) rubber Sample 1 is composed of natural rubber which contains filler reinforcement in a form of rubber reinforcing carbon black N120.

Control (Comparative) rubber Sample 2 is comprised of a combination of natural rubber and emulsion polymerization prepared styrene/butadiene rubber (E-SBR) which contains filler reinforcement in a form of rubber reinforcing carbon black N220.

Experimental rubber Sample A is similar to Control (Comparative) rubber Sample 1 except that it contains the bimodal aggregate size configuration precipitated silica such as Toksil UR silica represented by Curve A of Figure 1 rather than a monomodal aggregate size configuration precipitated silica such as Zeosil Premium 200™ silica from Solvay similar to Curve B of Figure 1.

Control (Comparative) rubber Sample 3 is comprised of natural rubber (cis 1,4-polyisoprene rubber) which contains reinforcing filler in a form of highly dispersible precipitated silica such as Zeosil 8755LS™ from Solvay (of a monomodal aggregate size configuration similar Curve B of Figure 1). The rubber composition contains only a trace amount of carbon black for cosmetic colorant purposes.

Experimental rubber Sample B is similar to Control (Comparative) rubber Sample 3 except that it has bimodal aggregate size configured precipitated silica such as Toksil UR silica rather than a more conventional monomodal aggregate size configuration as a high dispersible precipitated silica such as Zeopol 8755LS™ from Huber. The rubber composition contains only a trace amount of carbon black primarily for cosmetic purposes.

Control (Comparative) rubber Sample 4 is comprised of a combination of natural rubber, organic solvent solution polymerization derived styrene/butadiene rubber (S-SBR) and cis 1,4-polybutadiene rubber which contains reinforcing filler in a form of high surface area, highly dispersible monomodal aggregate size configuration precipitated silica as Zeosil Premium 200™ from Solvay and rubber reinforcing carbon black (N212). In addition, its cure system was modified to be consistent with Control rubber Sample 4.

Experimental rubber Sample D is similar to Control (Comparative) rubber Sample 4 except that its reinforcing filler is a bimodal aggregate size configured precipitated silica such as Toksil UR silica.

In a summary, only the Experimental rubber Samples (A, B, C and D) contain reinforcing filler as the bimodal aggregate size configured precipitated silica. It is sometimes used as the only reinforcing filler (Sample B) and sometimes combined with rubber reinforcing carbon black (Experimental rubber Samples A and D). It might be used, for example, in a rubber composition where its elastomer content is 100 percent polyisoprene rubber (Experimental rubber Sample B) or in a rubber composition which contains a significant amount of other diene-based elastomers, such as polybutadiene and S-SBR elastomers, (Experimental rubber Sample D).

The basic rubber composition formulation is shown in Table 1 and the ingredients are expressed in parts by weight per 100 parts rubber (phr) unless otherwise indicated.

The rubber compositions may be prepared, for example, by mixing the elastomers(s) without sulfur and sulfur cure accelerators in a non-productive mixing stage (NP) in an internal rubber mixer for 4 minutes to a temperature of 160°C. If desired, the rubber mixture may then mixed in a second non-productive mixing stage (NP-2) in an internal rubber mixer for 4 minutes to a temperature of 160°C with or without adding additional ingredients. The resulting rubber mixture may then mixed in a productive mixing stage (PR) in an internal rubber mixer with sulfur and sulfur cure accelerator(s) for 2 minutes to a temperature of 110°C. The rubber composition may then sheeted out and cooled to below 50°C between each of the non-productive mixing steps and prior to the productive mixing step. Such rubber mixing procedure is well known to those having skill in such art.

**Table 1**

| Non-Productive Mixing Step (NP1) | Parts (phr) Control |
|---|---|
| Elastomer(s)¹ | 100 |
| Carbon black, rubber reinforcing² | 0 to 35 |
| Silica, precipitated3 | 0 to 45 |
| Silica coupling agent as a 50/50 carbon black composite⁴ | 0 to 11.25 |
| Oil, rubber processing | 0 to 4 |
| Wax microcrystalline and paraffin | 0.5 to 2 |
| Fatty acid⁵ | 2 to 4 |
| Antioxidants | 2.5 to 4 |
| Zinc oxide | 3 |
| | |

| Productive Mixing Step (PR) | |
|---|---|
| Sulfur | 0.9 to 1.2 |
| Accelerator(s)⁶ | 0.8 to 1.6 |

| | |
|---|---|
| ¹Elastomers selected from natural rubber, styrene/butadiene rubber (S-SBR) and cis 1,4-polybutadiene rubber ²N220, N120 or N121 which are ASTM designations ³Bimodal aggregate sized configured and monomodal aggregate sized configured precipitated silica ⁴Composite of silica coupling agent and carbon black (carrier for the coupling agent) in a 50/50 weight ratio where said coupling agent is comprised of bis(3-triethoxysilylpropyl) polysulfide having an average of from 2 to 2.6 connecting sulfur atoms in its polysulfidic bridge as Si266™ from Evonik. Therefore, a composite of 11 phr would be comprised of 50 percent, or 5.5 phr, of rubber reinforcing carbon black. ⁵Mixture comprised of stearic, palmitic and oleic acids ⁶Sulfur cure accelerators | |

The following Table 2 is a summary of the Control and Experimental rubber Samples reflecting the elastomers and reinforcing filler used. The amounts are reported in terms of parts by weight per 100 parts by weight rubber (phr).

**Table 2**

| Materials | Parts by Weight (phr) | | | | | | | |
|---|---|---|---|---|---|---|---|---|
| | Cntl 1 | Cntl 2 | Exp A | Exp B | Cntl 3 | Exp C | Exp D | Cntl 4 |
| Natural rubber¹ | 100 | 80 | 80 | 100 | 100 | 80 | 60 | 60 |
| S-SBR rubber² | 0 | 0 | 0 | 0 | 0 | 20 | 16 | 16 |
| E-SBR rubber³ | 0 | 20 | 20 | 0 | 0 | 0 | 0 | 0 |
| Polybutadiene rubber⁴ | 0 | 0 | 0 | 0 | 0 | 0 | 24 | 24 |
| Carbon black (N220)⁵ | 0 | 48 | 0 | 0 | 0 | 0 | 0 | 0 |
| Carbon black (N120)⁶ | 43 | 0 | 35 | 0 | 0 | 35 | 0 | 0 |
| Carbon black (N121)⁷ | 0 | 0 | 0 | 0 | 0 | 0 | 26 | 26 |
| Bimodal precipitated silica (A)⁸ | 0 | 0 | 15 | 45 | 0 | 15 | 23 | 0 |
| Monomodal precipitated silica (B)⁹ | 9 | 0 | 0 | 0 | 0 | 0 | 0 | 0 |
| Monomodal precipitated silica (C)¹⁰ | 0 | 0 | 0 | 0 | 45 | 0 | 0 | 0 |
| Monomodal precipitated silica(D)¹¹ | 0 | 0 | 0 | 0 | 0 | 0 | 0 | 23 |
| Sulfur curative (sulfur)¹² | 0.9 | 1.2 | 1.2 | 1 | 1 | 1 | 1.2 | 1.2 |
| Sulfur cure accelerator¹³ | 0.9 | 1 | 1.6 | 1.4 | 2 | 2.5 | 2 | 2 |

| | | | | | | | | |
|---|---|---|---|---|---|---|---|---|
| ¹Natural cis 1,4-polyisoprene rubber ²Organic solvent polymerization prepared S-SBR (polymerization of styrene and 1,3-butadiene monomers) containing about 18.5 percent bound styrene as Solflex™ 18B10 from The Goodyear Tire & Rubber Company ³Emulsion (aqueous) polymerization prepared styrene/butadiene rubber (E-SBR) containing about 23 percent bound styrene as Plioflex™ 1502 from The Goodyear Tire & Rubber Company ⁴Cis 1,4-polybtadiene rubber as Budene4001™ from The Goodyear Tire and Rubber Company ⁵Carbon black as N220, reportedly having an iodine absorption value of about 121 g/kg (ASTM D1510) and dibutyl phthalate (DBP) adsorption value of about 114 cc/100g (ASTM D2414) ⁶Carbon black as N120, reportedly having an iodine absorption value of about 122 g/kg (ASTM D1510) and dibutyl phthalate (DBP) adsorption value of about 114 cc/100g (ASTM D2414) ⁷Carbon black as N121, reportedly having an iodine absorption value of about 121 g/kg (ASTM D1510) and dibutyl phthalate (DBP) adsorption value of about 130 cc/100g (ASTM D2414) ⁸Bimodal aggregate size configured precipitated silica configured with about 80 percent aggregates having an average aggregate size of about 0.07 microns and with about 20 percent aggregates having an average aggregate size of about 0.5 microns, with monomodal pore size by mercury porosimetry, with an acidity (pH) of about 5 and a nitrogen surface area greater than 190 square meters per gram as Tokusil UR from Tokuyama Siam Company ⁹Precipiated silica as Zeosil 125GR™ from Solvay ¹⁰Precipitated silica as Zeosil 8755LS™ from Solvay ¹¹Precipitated silica as Zeosil Premium 200 from Solvay ¹²Insoluble sulfur ¹³Sulfur cure accelerator(s) as a combination of sulfenamide and diphenyl guanidine sulfur cure accelerators | | | | | | | | |

Various physical properties of the rubber compositions are reported in the following Table 3. The physical properties of the Control 1 rubber sample are each reduced to a value of 100 and corresponding physical properties of the remainder of the rubber samples are normalized to the physical properties of 100 for the Control 1 rubber sample. The physical properties of the Control 1 rubber sample exhibit at least the threshold values reported in Table A.

**Table 3**

| | Parts by Weight | | | | | | | |
|---|---|---|---|---|---|---|---|---|
| Property | Cntl 1 | Cntl 2 | Exp A | Exp B | Cntl 3 | Exp C | Exp D | Cntl 4 |
| Storage modulus G', MPa (1) | 100 | 77 | 137 | 118 | 87 | 72 | 110 | 118 |
| Tan delta (2) | 100 | 135 | 60 | 82 | 81 | 91 | 90 | 92 |
| Hot rebound (100°C) | 100 | 86 | 112 | 99 | 127 | 104 | 118 | 102 |
| Toughness (3) | 100 | 143 | 149 | 212 | 85 | 343 | 140 | 82 |
| Grosch medium abrasion rate (4) | 100 | 106 | 108 | 122 | 100 | 66 | 87 | 80 |
| Grosch high abrasion rate (5) | 100 | 152 | 141 | 154 | 125 | 119 | 75 | 77 |
| Tear resistance (6) | 100 | 153 | 142 | 145 | 61 | 201 | 100 | 63 |
| Tear resistance, aged (7) | 100 | 166 | 124 | 132 | 86 | 122 | 99 | 66 |

| | | | | | | | | |
|---|---|---|---|---|---|---|---|---|
| (1) Conditions: 10 percent strain, 1 Hertz, 100°C-lower value is better for reduced hysteresis (2) Conditions: 10 percent strain, 1 Hertz, 100°C-higher value is better for reduced hysteresis (3) Toughness is a ratio of specific energy to break the rubber (joules) over static 300 percent modulus - higher values are better as an indication of better chip-chunk resistance of the rubber composition for the tire tread. Specific energy to break the rubber and 300 percent modulus values were obtained using a standard test to determine properties of vulcanized dumbbell shaped rubber samples described in ASTM D412-06A. (4) Grosch rate of abrasion (mg/km) medium severity - lower is better, as a lower abrasion rate (5) Grosch rate of abrasion (mg/km) high severity - lower is better, as a lower abrasion rate | | | | | | | | |

The Grosch abrasion rate run may be on an LAT-100 Abrader and is measured in terms of mg/km of rubber abraded away. The test rubber sample is placed at a slip angle under constant load (Newtons) as it traverses a given distance on a rotating abrasive disk (disk from HB Schleifmittel GmbH). In practice, a low abrasion severity test may be run, for example, at a load of 20 Newtons, 2 degree slip angle, disk speed of 40 km/hr for a distance of 7,500 meters; a medium abrasion severity test may be run, for example, at a load of 40 Newtons, 6 degree slip angle, disk speed of 20 km/hr and distance of 1,000 meters; a high abrasion severity test may be run, for example, at a load of 70 Newtons, 12 degree slip angle, disk speed of 20 km/hr and distance of 250 meters; and an ultra high abrasion severity test may be run, for example, at a load of 70 Newtons, 16 degree slip angle, disk speed of 20 km/hr and distance of 500 meters.

The tear resistance, a measure of resistance to cut growth initiation (sometimes referred to as tear strength) can be obtained by a tear resistance test. The test may be administered and reported, for example, by ASTM D1876-01 taken with DIN 53539 using a 5 mm wide tear width provided by a longitudinal open space, sometimes referred to as a window, cut or otherwise provided, in a film positioned between the two rubber test pieces where a window is provided in the test piece. Therefore, a composite is provided of the two pressed and sulfur cured together rubber samples with the film there between, (viewed through the window) which provides a geometrically defined area, sometimes referred to as a tear width, for portions of two rubber test pieces to be pressed and cured together after which the ends of the two test pieces are pulled apart at right angles (90° + 90° = 180°) and the force to pull the test pieces apart is measured. The size of the test rubber pieces is about 150 x 25 mm and the window is about 50 x 5 mm. An Instron instrument may be used to pull the rubber pieces apart and measure the force, usually in Newtons force.

For the aged tear resistance, the rubber composite is aged for seven 7 days at 70°C under atmospheric conditions.

From Table 3 it can be seen that the bimodal sized aggregate configured precipitated silica (with a combination of high nitrogen surface area of greater than 190 m²/g, monomodal pore size distribution and lower pH of about 5.5, thereby of a higher acidity as compared to other monomodal precipitated silicas) which was used in Experimental rubber Samples B, C and D) led to rubber compositions containing beneficially higher rebound physical properties (beneficially lower hysteresis and thereby beneficially lower predictive internal heat build-up during service) and beneficially higher tear resistance with, however, a reduction in abrasion resistance.

A significant discovery is presented by Experimental rubber Sample D containing the bimodal aggregate sized precipitated silica which illustrates a of special benefit of achieving a beneficial reduction in rate of abrasion combined with a beneficial increase in both tear resistance and toughness.

Also, in particular, use of the bimodal aggregate sized precipitated silica (for Experimental rubber Sample D) resulted in higher rebound physical property (indicative of beneficially lower hysteresis and beneficially lower internal heat generation during service) as well as beneficial increase in tear resistance and toughness properties, particularly in comparison to Control rubber Sample 4.

This is considered as being significant in a sense of being a discovery of providing a rubber composition (Experimental rubber Sample D for achieving improved hot rebound physical property and tan delta physical property which is indicative of beneficially lower hysteresis and associated beneficial predictive internal heat generation during service while beneficially improving the rubber's toughness and substantially maintaining, and possibly even improving, both cut growth resistance and abrasion resistance for the rubber composition by providing a balance between elastomers and filler reinforcement. It is considered that such balance of physical properties are important for a tire tread for the diverse mixed service use. Further, tires with treads of such rubber composition would be expected to have beneficial lower rolling resistances, resulting in increased fuel consumption for an associated vehicle. In addition, better durability of a tire carcass would be expected with reinforcement composed of a blend of the bimodal aggregate configured precipitated silica and rubber reinforcing carbon black because of the predictive lower internal heat generation during service. Such predictive lower internal heat generation with beneficially increased tear resistance and toughness values are readily predictive of beneficially better tire overall performance during mixed service operations, particularly during more severe operating conditions such as, for example, off-the-road service.

For clarification purposes, the data for the physical properties Table 3 is selectively repeated in the following Tables.

Here, Tables 4-A and 4-B are provided to depict Control rubber Samples 1 and 2 and Experimental rubber Sample A. For Table 4-B, the Control rubber Sample 1 has its physical properties reduced to a value of 100 and the physical properties of the other rubber samples in the Table 4-B have their values normalized to the value of 100 of the corresponding physical property of Control 1 rubber Sample.

**Table 4-A**

| | Parts by Weight (phr) | | |
|---|---|---|---|
| Materials | Control 1 | Control 2 | Experimental A |
| Natural rubber¹ | 100 | 80 | 80 |
| E-SBR rubber³ | 0 | 20 | 20 |
| Polybutadiene rubber⁴ | 0 | 0 | 0 |
| Carbon black (N220)⁵ | 0 | 48 | 0 |
| Carbon black (N120)⁶ | 43 | 0 | 35 |
| Bimodal precipitated silica (A)⁸ | 0 | 0 | 15 |
| Monomodal precipitated silica (B)⁹ | 9 | 0 | 0 |
| Sulfur curative (sulfur)¹² | 0.9 | 1.2 | 1.2 |
| Sulfur cure accelerator¹³ | 0.9 | 1 | 1.6 |

**Table 4-B**

| Property | Control 1 | Control 2 | Experimental A |
|---|---|---|---|
| Storage modulus G', MPa (1) | 100 | 77 | 137 |
| Tan delta (2) | 100 | 135 | 60 |
| Hot rebound (100°C) | 100 | 86 | 112 |
| Toughness (3) | 100 | 143 | 149 |
| Grosch medium abrasion (4) | 100 | 106 | 108 |
| Grosch high Abrasion (5) | 100 | 152 | 141 |
| Tear resistance (6) | 100 | 153 | 142 |
| Tear resistance, aged (7) | 110 | 166 | 124 |

From Table 4-B it is seen that the rubber hysteresis beneficially increased for the Experimental A rubber sample which used reinforcing filler as the bimodal size configured precipitated silica (as indicated by the increase in hot rebound and reduction of tan delta physical properties). The tear resistance also beneficially increased as did the toughness property. However, the rate of abrasion values (Grosch abrasion rates) were particularly high for the Experimental A rubber sample and reasonably outside of the aforesaid threshold Grosch high severity rate of abrasion of Table A.

Tables 5-A and 5-B are provided to illustrate Control rubber Samples 1 and 3 and Experimental rubber Sample B. For Table 5-B, the Control rubber Sample 1 has its physical properties reduced to a value of 100 and the physical properties of the other rubber Samples in the Table 5-B have their values normalized to the value of 100 of the corresponding physical property of Control 1 rubber Sample.

**Table 5A**

| | Parts by Weight (phr) | | |
|---|---|---|---|
| Materials | Control 1 | Experimental B | Control 3 |
| Natural rubber¹ | 100 | 80 | 80 |
| Natural rubber¹ | 100 | 100 | 100 |
| Carbon black (N120)⁶ | 43 | 0 | 0 |
| Bimodal precipitated silica (A)⁸ | 0 | 45 | 0 |
| Monomodal precipitated silica (B)⁹ | 9 | 0 | 0 |
| Monomodal precipitated silica (C)¹⁰ | 0 | 0 | 45 |
| Sulfur curative (sulfur)¹² | 0.9 | 1 | 1 |
| Sulfur cure accelerator¹³ | 0.9 | 1.4 | 2 |

**Table 5-B**

| Property | Control 1 | Experimental B | Control 2 |
|---|---|---|---|
| Storage modulus G', MPa (1) | 100 | 118 | 87 |
| Tan delta (2) | 100 | 82 | 81 |
| Hot rebound (100°C) | 100 | 99 | 127 |
| Toughness (3) | 100 | 212 | 85 |
| Grosch medium abrasion (4) | 100 | 122 | 100 |
| Grosch high abrasion (5) | 100 | 154 | 125 |
| Tear resistance (6) | 100 | 145 | 61 |
| Tear resistance, aged (7) | 100 | 132 | 86 |

From Table 5-B it can be seen that the hysteresis for Experimental rubber Sample B (to which the bimodal aggregate sized precipitated silica was added and for which the N120 carbon black was used) was similar to Control 1 rubber sample (as indicated by hot rebound and tan delta rubber property values). However the tear resistance values were greatly and beneficially increased as well as the toughness value. However the rate of abrasion for Experimental B rubber sample was particularly high and reasonably outside of the aforesaid threshold Grosch high severity rate of abrasion of Table A.

Tables 6-A and 6-B are provided to illustrate Control rubber Samples 1 and 4 and Experimental rubber Samples B and D. For Table 6-B, the Control rubber Sample 1 has its physical properties reduced to a value of 100 and the physical properties of the other rubber Samples in the Table 5-B have their values normalized to the value of 100 of the corresponding physical property of Control 1 rubber sample.

**Table 6-A**

| | Parts by Weight (phr) | | | |
|---|---|---|---|---|
| Materials | Control 1 | Experimental B | Experimental D | Control 4 |
| Natural rubber | 100 | 100 | 60 | 60 |
| S-SBR rubber2 | 0 | 0 | 16 | 16 |
| Polybutadiene rubber⁴ | 0 | 0 | 24 | 24 |
| Carbon black (N120)⁶ | 43 | 0 | 0 | 0 |
| Carbon black (N121 )⁷ | 0 | 0 | 26 | 26 |
| Bimodal precipitated silica (A)⁸ | 0 | 45 | 23 | 0 |
| Monomodal silica (B)⁹ | 9 | 0 | 0 | 0 |
| Monomodal precipitated silica (D)¹¹ | 0 | 0 | 0 | 23 |
| Sulfur curative (sulfur)¹² | 0.9 | 0.9 | 1.2 | 1.2 |
| Sulfur cure accelerator¹³ | 0.9 | 0.9 | 2 | 2 |

**Table 6-B**

| Property | Control 1 | Experimental B | Experimental D | Control 4 |
|---|---|---|---|---|
| Storage modulus G', MPa (1) | 100 | 118 | 110 | 118 |
| Tan delta (2) | 100 | 82 | 91 | 92 |
| Hot rebound (100°C) | 100 | 99 | 118 | 102 |
| Toughness(3) | 100 | 212 | 140 | 82 |
| Grosch medium abrasion (4) | 100 | 122 | 87 | 80 |
| Grosch high abrasion (5) | 100 | 154 | 75 | 77 |
| Tear resistance (6) | 100 | 145 | 100 | 63 |
| Tear resistance, aged (7) | 100 | 132 | 99 | 66 |

From Table 6-B it can be seen that hysteresis (rebound and tan delta physical properties) was similar to the Control 1 rubber sample for the rubber sample represented by Experimental rubber Sample B and was significantly and beneficially increased for the rubber sample represented by Experiment D with the included addition of the cis 1,4-polybutadiene and low styrene contend S-SBR for is seen to have enabled a beneficially reduced Grosch high severity rate of abrasion reasonably within the indicated threshold value of Table A and provided a beneficially high toughness yet maintained or improved both the hysteresis and tear resistance properties. It is considered that this is a significant discovery for providing a rubber tread for a pneumatic tire with the result being uncertain without suitable experimentation with the bimodal aggregated sized precipitated silica in a natural rubber-rich tread rubber composition intended for aforesaid mixed service use.

It is thereby concluded that a significant discovery has provided a natural rubber (cis 1,4-polyhisoprene) composition containing the bimodal aggregate sized precipitated silica in the natural rubber (cis 1,4-polyisoprene) as a beneficial improvement in both hysteresis and tear strength as well as toughness for the rubber composition for a tire tread rubber composition intended for the diverse mixed service purpose for the tire tread of this invention, although its abrasion resistance is observed to be somewhat sacrificed.

Such discovery also provides a building into the bimodal aggregate sized precipitated silica containing natural rubber (cis 1,4-polyisooprene) based rubber composition a further improvement for an increased abrasion resistance while being able to maintain the beneficial hysteresis and tear strength properties of the rubber composition by an inclusion of at least one of cis 1,4-butadiene and low styrene, low Tg, S-SBR elastomers with the cis 1,4-polyisoprene rubber for the bimodal aggregate sized precipitated silica containing rubber composition.

It is considered that providing the beneficial combination of hysteresis, tear resistance and abrasion resistance as well as toughness properties for the foresaid tire tread rubber composition for the diverse mixed service application is a discovery resulting from experimentation with the aforesaid combination of bimodal precipitated silica in a natural rubber-rich rubber composition together with at least one of the cis 1,4-polytudiene and low styrene S-SBR elastomers with the result being uncertain until the designed experimentations were conducted. This observation is considered to be particularly applicable for Experimental rubber Sample D of the Example.

## Claims

1. A rubber composition comprising, based on parts by weight per 100 parts by weight of elastomer (phr),
(A) conjugated diene-based elastomers comprising:
(1) 55 to 80 phr or 60 to 80 phr of a cis 1,4-polyisoprene rubber, and
(2) 20 to 45 phr or 20 to 40 phr of at least one additional conjugated diene-based elastomer comprising a cis 1,4-polybutadiene rubber and an organic solution polymerization prepared styrene/butadiene rubber (S-SBR) having a bound styrene content in a range of from 12 to 20 percent;
(B) 40 to 120 phr of a filler comprising a combination of carbon black and silica, wherein the filler comprises from 2 to 50 phr of carbon black and from 38 to 118 phr of silica and wherein the silica is or comprises a bimodal aggregate size configured silica with a monomodal pore size distribution.

2. The rubber composition of claim 1 wherein the bimodal aggregate size configured silica comprises of from 60 to 80 weight percent of silica with an average aggregate size configuration in a range of from 0.05 to 0.11 microns and from 20 to 40 weight percent of silica with an average size configuration in a range of from 0.12 to 1 micron.

3. The rubber composititon of claim 1 or 2 wherein the carbon black is a rubber reinforcing carbon black and/or the silica is a precipitated silica.

4. The rubber composititon of at least one of the previous claims further comprising a silica coupling agent for said silica or precipitated silica having a moiety reactive with hydroxyl groups on said silica or precipitated silica and another different moiety interactive with carbon-to-carbon double bonds of said conjugated diene-based elastomers.

5. The rubber composititon of at least one of the previous claims wherein the cis 1,4-polyisoprene rubber has a cis 1,4-isomeric content of at least 90 percent, alternatively at least 95 percent; and/or wherein the cis 1,4-polybutadiene rubber has a cis 1,4-isomeric content of at least 90 percent, alternatively at least 95 percent.

6. The rubber composititon of at least one of the previous claims wherein the cis 1,4-polyisoprene rubber is natural rubber.

7. The rubber composititon of at least one of the previous claims wherein the additional conjugated diene based elastomer is or comprises cis 1,4-polybutadiene rubber.

8. The rubber composititon of at least one of the previous claims wherein the cis 1,4-polyisoprene rubber is natural rubber and the additional conjugated diene based elastomer is or comprise cis 1,4-polybutadiene rubber and the S-SBR having a Tg in a range of from -68°C to -72°C.

9. The rubber composititon of at least one of the previous claims wherein the bimodal aggregate size configured silica aggregates has a nitrogen surface area of greater than 190 m²/g and a pH in a range of from 3 to 5.6.

10. The rubber composititon of at least one of the previous claims wherein the silica also contains from 2 to 20 weight percent of monomodal aggregate size configured silica or precipitated silica.

11. The rubber composititon of at least one of the previous claims wherein the S-SBR is at least one of:
(A) a functionalized elastomer containing functional groups reactive with hydroxyl groups contained on said bimodal aggregate sized silica wherein said functional groups comprise siloxy and at least one of amine and thiol groups, or
(B) a tin coupled functionalized elastomer containing functional groups reactive with hydroxyl groups contained on said bimodal aggregate sized silica wherein said functional groups comprise siloxy and at least one of amine and thiol groups.

12. The rubber composititon of at least one of the previous claims wherein the cis 1,4-polybutadiene rubber is or comprises:
(A) a first cis 1,4-polybutadiene rubber having a microstructure comprising from 90 to 99 percent cis 1,4-isomeric units, a number average molecular weight (Mn) in a range of from 120,000 to 300,000 and a heterogeneity index (Mw/Mn) in a range of from 2.1/1 to 4.5/1, and/or
(B) a second cis 1,4-polybutadiene rubber having a microstructure comprising from 93 to 99 percent cis 1,4-isomeric units, a number average molecular weight (Mn) in a range of from 150,000 to 300,000 and a heterogeneity index (Mw/Mn) in a range of from 1.5/1 to 2/1.

13. The rubber composititon of at least one of the previous claims wherein the cis 1,4-polybutadiene rubber is a tin coupled, branched cis 1,4-polybutadiene rubber.

14. The rubber composititon of at least one of the previous claims wherein the silica coupling agent is or comprises at least one of alkoxyorganomercaptosilane and bis(3-trialkoxysilylpropyl) polysulfide having an average in a range of from 2 to 4 connecting sulfur atoms in its polysulfidic bridge and where said silica or precipitated silica is contained in said rubber composition as pre-formed composite of said silica and said silica coupling agent or where said silica or precipitated silica and said silica coupling agent are provided individually in said rubber composition.

15. A pneumatic tire having a circumferential rubber tread comprising a rubber composition in accordance with at least one of the previous claims.

## Patentansprüche

1. Kautschukzusammensetzung, umfassend, auf Basis von Gewichtsteilen je 100 Gewichtsteile Elastomer (phr),
(A) auf konjugiertem Dien basierte Elastomere, umfassend:
(1) 55 bis 80 oder 60 bis 80 phr eines cis-1,4-Polyisoprenkautschuks, und
(2) 20 bis 45 oder 20 bis 40 phr mindestens eines zusätzlichen auf konjugiertem Dien basierten Elastomers, umfassend einen cis-1,4-Polybutadienkautschuk und einen durch organische Lösungspolymerisation hergestellten Styrol-/Butadienkautschuk (S-SBR) mit einem Gehalt an gebundenem Styrol im Bereich von 12 bis 20 Prozent;
(B) 40 bis 120 phr eines Füllstoffs, umfassend eine Kombination von Carbon Black und Silika, wobei der Füllstoff 2 bis 50 phr Carbon Black und 38 bis 118 phr Silika umfasst, und wobei das Silika ein mit bimodaler Aggregatgröße konfiguriertes Silika mit einer monomodalen Porengrößenverteilung ist oder umfasst.

2. Kautschukzusammensetzung nach Anspruch 1, wobei das mit bimodaler Aggregatgröße konfigurierte Silika 60 bis 80 Gewichtsprozent Silika mit einer durchschnittlichen Aggregatgrößenkonfiguration im Bereich von 0,05 bis 0,11 Mikron und 20 bis 40 Gewichtsprozent Silika mit einer durchschnittlichen Aggregatgrößenkonfiguration im Bereich von 0,12 bis 1 Mikron umfasst.

3. Kautschukzusammensetzung nach Anspruch 1 oder 2, wobei das Carbon Black ein Kautschukverstärkungs-Carbon Black ist und/oder das Silika ein gefälltes Silika ist.

4. Kautschukzusammensetzung nach mindestens einem der vorhergehenden Ansprüche, weiter einen Silika-Haftvermittler für das Silika oder gefällte Silika umfassend, der einen mit Hydroxylgruppen an dem Silika oder gefällten Silika reaktiven Anteil und einen anderen, verschiedenen Anteil, der mit Kohlenstoff-KohlenstoffDoppelbindungen der auf konjugiertem Dien basierten Elastomere in Wechselwirkung tritt, aufweist.

5. Kautschukzusammensetzung nach mindestens einem der vorhergehenden Ansprüche, wobei der cis-1,4-Polyisoprenkautschuk einen cis-1,4-Isomergehalt von mindestens 90 Prozent, alternativ mindestens 95 Prozent, aufweist; und/oder wobei der cis-1,4-Polybutadienkautschuk einen cis-1,4-Isomergehalt von mindestens 90 Prozent, alternativ mindestens 95 Prozent, aufweist.

6. Kautschukzusammensetzung nach mindestens einem der vorhergehenden Ansprüche, wobei der cis-1,4-Polyisoprenkautschuk Naturkautschuk ist.

7. Kautschukzusammensetzung nach mindestens einem der vorhergehenden Ansprüche, wobei das zusätzliche auf konjugiertem Dien basierte Elastomer cis-1,4-Polybutadienkautschuk ist oder umfasst.

8. Kautschukzusammensetzung nach mindestens einem der vorhergehenden Ansprüche, wobei der cis-1,4-Polyisoprenkautschuk Naturkautschuk ist und das zusätzliche auf konjugiertem Dien basierte Elastomer cis-1,4-Polybutadienkautschuk und das S-SBR mit einer Tg im Bereich von -68°C bis -72°C ist oder umfasst.

9. Kautschukzusammensetzung nach mindestens einem der vorhergehenden Ansprüche, wobei die mit bimodaler Aggregatgröße konfigurierten Silika-Aggregate eine Stickstoffoberfläche von größer als 190 m2/g und einen pH-Wert im Bereich von 3 bis 5,6 aufweisen.

10. Kautschukzusammensetzung nach mindestens einem der vorhergehenden Ansprüche, wobei das Silika auch 2 bis 20 Gewichtsprozent von mit monomodaler Aggregatgröße konfiguriertem Silika oder gefälltem Silika enthält.

11. Kautschukzusammensetzung nach mindestens einem der vorhergehenden Ansprüche, wobei das S-SBR mindestens eines ist von:
(A) einem funktionalisierten Elastomer, das funktionelle Gruppen enthält, die mit an dem bimodale Aggregatgröße aufweisenden Silika enthaltenen Hydroxylgruppen reaktiv sind, wobei die funktionellen Gruppen Siloxy und mindestens eines von Amin- und Thiolgruppen umfassen, oder
(B) einem zinngekoppelten funktionalisierten Elastomer, das funktionelle Gruppen enthält, die mit an dem bimodale Aggregatgröße aufweisenden Silika enthaltenen Hydroxylgruppen reaktiv sind, wobei die funktionellen Gruppen Siloxy und mindestens eines von Amin- und Thiolgruppen umfassen.

12. Kautschukzusammensetzung nach mindestens einem der vorhergehenden Ansprüche, wobei der cis-1,4-Polybutadienkautschuk ist oder umfasst:
(A) ein erster cis-1,4-Polybutadienkautschuk, der eine Mikrostruktur aufweist, umfassend 90 bis 99 Prozent cis-1,4-Isomereinheiten, eine zahlenmittlere Molmasse (Mn) im Bereich von 120.000 bis 300.000 und eine Heterogenitätszahl (Mw/Mn) im Bereich von 2,1:1 bis 4,5:1, und/oder
(B) ein zweiter cis-1,4-Polybutadienkautschuk, der eine Mikrostruktur aufweist, umfassend 93 bis 99 Prozent cis-1,4-Isomereinheiten, eine zahlenmittlere Molmasse (Mn) im Bereich von 150.000 bis 300.000 und eine Heterogenitätszahl (Mw/Mn) im Bereich von 1,5:1 bis 2:1.

13. Kautschukzusammensetzung nach mindestens einem der vorhergehenden Ansprüche, wobei der cis-1,4-Polybutadienkautschuk ein zinngekoppelter, verzweigter cis-1,4-Polybutadienkautschuk ist.

14. Kautschukzusammensetzung nach mindestens einem der vorhergehenden Ansprüche, wobei der Silika-Haftvermittler mindestens eines von Alkoxyorganomercaptosilan und bis(3-Trialkoxysilylpropyl)polysulfid mit einem Durchschnitt im Bereich von 2 bis 4 verbindenden Schwefelatomen in seiner Polysulfidbrücke ist oder umfasst, und wobei das Silika oder gefällte Silika in der Kautschukzusammensetzung als vorgeformter Verbundwerkstoff aus dem Silika und dem Silika-Haftvermittler enthalten ist, oder wobei das Silika oder gefällte Silika und der Silika-Haftvermittler individuell in der Kautschukzusammensetzung vorgesehen sind.

15. Luftreifen, der eine umfangsgerichtete Kautschuklauffläche aufweist, umfassend eine Kautschukzusammensetzung gemäß mindestens einem der vorhergehenden Ansprüche.

## Revendications

1. Composition de caoutchouc comprenant, en se basant sur des parties en poids par 100 parties en poids d'élastomère (phr) :
(A) des élastomères à base de diènes conjugués comprenant :
(1) de 55 à 80 phr ou de 60 à 80 phr d'un caoutchouc de 1,4-cis polyisoprène ; et
(2) de 20 à 45 phr ou de 20 à 40 phr d'au moins un élastomère supplémentaire à base d'un diène conjugué comprenant un caoutchouc de 1,4-cis polybutadiène et un caoutchouc de styrène/butadiène préparé via une polymérisation en solution organique (S-SBR) possédant une teneur en styrène lié dans la plage de 12 à 20 % ;
(B) de 40 à 120 phr d'une matière de charge comprenant une combinaison de noir de carbone et de silice, dans laquelle la matière de charge comprend de 2 à 50 phr de noir de carbone et de 38 à 118 phr de silice, et dans laquelle la silice représente ou comprend de la silice configurée sous la forme d'une dimension d'agrégat bimodale avec une distribution d'une dimension monomodale des pores.

2. Composition de caoutchouc selon la revendication 1, dans laquelle la silice configurée sous la forme d'une dimension d'agrégat bimodale comprend de 60 à 80 % en poids de silice avec une configuration de dimension d'agrégat moyenne dans la plage de 0,05 à 0,11 micron et de 20 à 40% en poids de silice avec une configuration de dimension moyenne dans la plage de 0,12 à 1 micron.

3. Composition de caoutchouc selon la revendication 1 ou 2, dans laquelle le noir de carbone représente un noir de carbone pour le renforcement du caoutchouc et/ou la silice représente une silice précipitée.

4. Composition de caoutchouc selon au moins une des revendications précédentes, comprenant en outre un agent de couplage pour ladite silice ou pour ladite silice précipitée possédant une fraction apte à réagir avec des groupes hydroxyle sur ladite silice ou sur ladite silice précipitée et une autre fraction différente apte à entrer en interaction avec des liaisons doubles carbone-carbone desdits élastomères à base de diènes conjugués.

5. Composition de caoutchouc selon au moins une des revendications précédentes, dans laquelle le caoutchouc de 1,4-cis polyisoprène possède une teneur en isomère 1,4-cis s'élevant à au moins 90 %, en variante à au moins 95 % et/ou le caoutchouc de 1,4-cis polybutadiène possède une teneur en isomère 1,4-cis s'élevant à au moins 90 %, en variante à au moins 95 %.

6. Composition de caoutchouc selon au moins une des revendications précédentes, dans laquelle le caoutchouc de 1,4-cis polyisoprène représente un caoutchouc naturel.

7. Composition de caoutchouc selon au moins une des revendications précédentes, dans laquelle l'élastomère supplémentaire à base d'un diène conjugué représente ou comprend du caoutchouc de 1,4-cis polybutadiène.

8. Composition de caoutchouc selon au moins une des revendications précédentes, dans laquelle le caoutchouc de 1,4-cis polyisoprène représente un caoutchouc naturel et l'élastomère supplémentaire à base d'un diène conjugué représente ou comprend du caoutchouc de 1,4-cis polybutadiène et le caoutchouc S-SBR possède une valeur Tg dans une plage de -68 °C à -72 °C.

9. Composition de caoutchouc selon au moins une des revendications précédentes, dans laquelle les agrégats de silice configurés sous la forme d'une dimension d'agrégat bimodale possèdent une surface spécifique par adsorption d'azote supérieure à 190 m²/g et un pH dans une plage de 3 à 5,6.

10. Composition de caoutchouc selon au moins une des revendications précédentes, dans laquelle la silice contient également à concurrence de 2 à 20 % en poids, de la silice possédant une configuration sous la forme d'agrégat monomodale ou de la silice précipitée.

11. Composition de caoutchouc selon au moins une des revendications précédentes, dans laquelle le caoutchouc S-SBR représente au moins un caoutchouc choisi parmi :
(A) un élastomère fonctionnalisé contenant des groupes fonctionnels aptes à réagir avec des groupes hydroxyle présents sur ladite silice possédant une dimension d'agrégat bimodale, dans lequel lesdits groupes fonctionnels comprennent un groupe siloxy et au moins un groupe choisi parmi un groupe amine et un groupe thiol ; ou
(B) un élastomère fonctionnalisé couplé à l'étain contenant des groupes fonctionnels aptes à réagir avec des groupes hydroxyle présents sur ladite silice possédant une dimension d'agrégat bimodale, dans lequel lesdits groupes fonctionnels comprennent un groupe siloxy et au moins un groupe choisi parmi un groupe amine et un groupe thiol.

12. Composition de caoutchouc selon au moins une des revendications précédentes, dans laquelle le caoutchouc de 1,4-cis polybutadiène représente ou comprend :
(A) un premier caoutchouc de 1,4-cis polybutadiène possédant une microstructure comprenant des unités isomères 1,4-cis à concurrence de 90 à 99 %, un poids moléculaire moyen en nombre (Mn) dans la plage de 120.000 à 300.000 et un indice d'hétérogénéité (Mw/Mn) dans la plage de 2,1/1 à 4,5/1 ; et/ou
(B) un second caoutchouc de 1,4-cis polybutadiène possédant une microstructure comprenant des unités isomères 1,4-cis à concurrence de 93 à 99 %, un poids moléculaire moyen en nombre (Mn) dans la plage de 150.000 à 300.000 et un indice d'hétérogénéité (Mw/Mn) dans la plage de 1,5/1 à 2/1.

13. Composition de caoutchouc selon au moins une des revendications précédentes, dans laquelle le caoutchouc de 1,4-cis polybutadiène représente un caoutchouc de 1,4-cis polybutadiène à chaîne ramifiée, couplé à l'étain.

14. Composition de caoutchouc selon au moins une des revendications précédentes, dans laquelle l'agent de couplage pour la silice représente ou comprend au moins un agent de couplage choisi parmi l'alcoxyorganomercaptosilane et le bis(3-trialcoxysilylpropyl) polysulfure possédant une moyenne dans la plage de 2 à 4 atomes de soufre de liaison dans son pont polysulfure, et dans laquelle ladite silice ou ladite silice précipitée est contenue dans ladite composition de caoutchouc sous la forme d'un composite préfaçonné de ladite silice et dudit agent de couplage pour la silice ou dans laquelle ladite silice ou ladite silice précipitée et ledit agent de couplage pour la silice sont fournis sous une forme individuelle dans ladite composition de caoutchouc.

15. Bandage pneumatique possédant une bande de roulement circonférentielle en caoutchouc comprenant une composition de caoutchouc selon au moins une des revendications précédentes.
